# EUROPÄISCHE PATENTANMELDUNG

(11) **EP 2 840 013 A1**
(43) Veröffentlichungstag der Anmeldung: **25.02.2015**
(21) Anmeldenummer: 13405102.8
(22) Anmeldetag: 21.08.2013
(51) Int. Cl.: B62D 49/06, B62D 51/04, B62D 51/06

(54) **Selbstfahrende, vorzugsweise einachsige, manuell lenkbare Arbeitsmaschine**

(71) Anmelder: Rapid Technic AG, 8956 Killwangen (CH)
(72) Erfinder: Bösch, Urs, 9500 Wil (CH)
(74) Vertreter: Fenner, Werner

(57) **Zusammenfassung**

Eine selbstfahrende, vorzugsweise einachsige und manuell lenkbare Arbeitsmaschine (1) für das Fortbewegen und/oder Antreiben von anbaubaren Arbeitsgeräten (15), ist mit einem Antriebsmotor (6) und einer von diesem hydraulisch oder mechanisch antreibbaren, beidseits eines Fahr- resp. Maschinengestells (2)quer zur Fortbewegungsrichtung (F) abstehenden Fahrachse (3) ausgestattet, an deren Enden jeweils ein mit einer Antriebswelle verbundenes bereiftes Rad (4, 5) angeordnet ist, und weist eine mit dem Antriebsmotor (6) zuschaltbar verbundene Arbeitswelle für den Antrieb der an dem Maschinengestell (2) anbaubaren Arbeitsgeräte (15) auf, dabei ist die Arbeitswelle durch eine mit dem Antriebsmotor (6) der Arbeitsmaschine (1) antriebsverbundene Hydraulikpumpe (14) und einem mit letzterer leitungsverbundenen, arbeitsgeräteseitig mit einer Antriebsvorrichtung (22) eines Arbeitsgerätes (15) mechanisch kuppel- resp. entkuppelbaren-Hydraulikmotor (23) ausgebildet ist.

## Beschreibung

Die Erfindung betrifft eine selbstfahrende, vorzugsweise einachsige, manuell lenkbare Arbeitsmaschine für das Fortbewegen und/oder Antreiben von anbaubaren Arbeitsgeräten, mit einem Antriebsmotor und einer von diesem hydraulisch oder mechanisch antreibbaren, beidseits eines Fahrgestells quer zur Fortbewegungsrichtung abstehenden Fahrachse, an deren Enden jeweils ein mit einer Antriebswelle verbundenes Rad angeordnet ist, und einer mit dem Antriebsmotor zuschaltbar verbundenen Arbeitswelle für den Antrieb des an dem Maschinengestell angebauten Arbeitsgerätes.

Als Arbeitswelle gilt eine Antriebsverbindung nach dem Antriebsmotor resp. zwischen diesem und der einem Arbeitsgerät zugehörenden Antriebsvorrichtung, beispielsweise ein dem Antriebsmotor zuschaltbares Getriebe zur Änderung der Motordrehzahl und ein mit dem Getriebe verbundenes Antriebsorgan, das mit der Antriebsvorrichtung der Arbeitsmaschine verbunden ist, beispielsweise eine Welle, eine Gelenkwelle, ein Kurbelzapfen oder dgl.

Maschinen der eingangs beschriebenen Art werden in der Landwirtschaft, bei Gartengestaltungs- und Erdbauunternehmen, in kommunalen Unterhaltsbetrieben und der Industrie u.a. zum Betreiben von angebauten Arbeitsgeräten eingesetzt, beispielsweise für die Bodenbearbeitung, Schneeräumung, den Transport von Gütern, die Grünflächen (Rasen) -pflege und die Strassenreinigung, für die landwirtschaftliche Futterernte sowie in der Forstwirtschaft.

Die EP 1 486 404 A1 beschreibt solche Maschinen, die frontseitig eine antreibbare Zapfwelle aufweisen, die mit einer Gelenkwelle eines fortbewegten Arbeitsgerätes kuppelbar ist, wobei die Zapfwelle üblicherweise von einem Gehäuse umgeben ist.

Bei einer anderen fahrbaren Arbeitsmaschine der eingangs erwähnten Art nach der EP 2 449 874 A1 ist an der Vorderseite eine Fördereinrichtung angebaut, die auf der gemähten Bodenoberfläche liegendes gemähtes Halmgut über die Förderbreite der Fördereinrichtung aufnimmt und nach einer Seite auf liegendes Halmgut ablegt. Diese auf dem Boden abgestützte Fördereinrichtung wird mit der Zapfwelle der Arbeitsmaschine angetrieben.

Eine zumindest gattungsähnliche Maschine ist in der CH 695 511 A5 offenbart.

Es hat sich an die vorliegende Erfindung die Aufgabe gestellt, unterschiedliche Arbeitsgeräte auf einfache Art und leichte Arbeitsweise mit einer Arbeitsmaschine antriebverbinden zu können, ohne dabei Teile auswechseln und Spezialwerkzeug verwenden zu müssen.

Erfindungsgemäss wurde die Aufgabe dadurch gelöst, dass die Arbeitswelle durch eine mit dem Antriebsmotor der Arbeitsmaschine antriebsverbundene Hydraulikpumpe und einem mit letzterer leitungsverbundenen, arbeitsgeräteseitig mit einer Antriebsvorrichtung mechanisch kuppel- resp. entkuppelbaren Hydraulikmotor ausgebildet ist.

Dadurch kann die Arbeitsmaschine mit wahlweise unterschiedlichen Arbeitsgeräten im Handumdrehen betriebsbereit und ohne zusätzliche Hilfsmittel eingerichtet werden.

Es erübrigen sich beim Anbau der Geräte Anpassungs- und Einstellvorkehrungen an der Schnittstelle zwischen Arbeitsmaschine und Arbeitsgerät.

Im Vergleich mit dem Stand der Technik bietet sich dem Benutzer eine bedienerfreundlichere Ausstattung mit einer flexiblen Arbeitswelle an, die eine gute Zugänglichkeit zur Steckverbindung resp. Antriebsvorrichtung oder Antriebswelle eines Arbeitsgerätes erlaubt.

Vorteilhaft ist die Leitungsverbindung zwischen Hydraulikpumpe und Hydraulikmotor durch Vor- und Rücklaufleitung ausgebildet, wodurch ein bewährtes System zur Anwendung kommt.

Die Aufgabe alternativ mit einer bekannten biegsamen Welle auf mechanische Art mit einem zuschaltbaren Getriebe zu lösen, erwies sich als nicht erfolgversprechend, da sich biegsame Wellen zur Übertragung von Drehmomenten resp. Antriebsleistungen aufgrund einer beschränkten Belastbarkeit in der vorliegenden Kategorie von Arbeitsgeräten nicht eignen werden. Biegsame Wellen bestehen aus mehreren Lagen entgegengesetzt schraubenförmig gewundener Drähte, die in einem metallischen oder Kunststoffschlauch rotieren.

Vorzugsweise ist das von der Hydraulikpumpe abgewandte Ende der Vor- und Rücklaufleitung durch den mit einer Antriebswelle der Antriebsvorrichtung eines Arbeitsgerätes verbundenen Hydraulikmotor ausgebildet, sodass eine kompakte leicht handelbare Bauweise vorliegt.

Es erweist sich als einfach, wenn eine Abtriebswelle des Hydraulikmotors mit einer Antriebswelle der Antriebsvorrichtung unmittelbar verbindbar ist, sodass eine einfache Handhabung für die Koppelung der Hydraulikaggregate entsteht.

Als einfach erweist sich eine Ausführungsform, wenn die Abtriebswelle an dem Hydraulikmotor formschlüssig in eine komplementär ausgebildete Bohrung der Antriebswelle der Antriebsvorrichtung einsteckbar ist, sodass wenig Material und Bearbeitungsaufwand und eine verständliche Situation entsteht.

Zu diesem Zweck ist es vorteilhaft, wenn die Abtriebswelle des Hydraulikmotors ein keilförmige resp. mehrkeiliges Ende aufweist, das in die als Hohlwelle ausgestaltete Antriebswelle der Antriebsvorrichtung einsteckbar ist oder umgekehrt.

Es ist weiterhin zweckmässig, wenn der Hydraulikmotor an einem Arbeitsgerät verdrehsicher befestigbar ist.

Hierzu dient vorzugsweise ein an einem Arbeitsgerät befestigtes Lagergehäuse der Antriebsvorrichtung

Eine kompakte Verbindungsleitung bilden die Vor- und Rücklaufleitung des Druckmediums, wenn sie von einem schlauchförmigen Mantel zu einem flexiblen Schlauchpaket vereint sind.

Das durch den Hydraulikmotor gebildete eine Ende der Vor- und Rücklaufleitungen kann in der Ausserbetriebsposition an dem Maschinengestell oder der Hydraulikpumpe eingestellt werden.

Vorteilhaft ist der Hydraulikmotor in der Ausserbetriebsstellung der Arbeitsmaschine oder in der Betriebsstellung eines Arbeitsgerätes in vorzugsweise horizontaler oder vertikaler Richtung in eine entsprechende Steckverbindung resp. in eine Antriebswelle einer Antriebsvorrichtung eines Arbeitsgerätes einsteckbar, sodass ein einfacher und schneller Kupplungs- und Entkupplungsvorgang möglich ist.

Nachfolgend wird die Erfindung unter Bezugnahme auf den zitierten resp. den zitierenden Stand der Technik und die Zeichnung, auf die bezüglich aller in der Beschreibung nicht näher erwähnten Einzelheiten verwiesen wird, anhand eines Ausführungsbeispiele erläutert. In der Zeichnung zeigen:
- Fig. 1: eine Seitenansicht einer erfindungsgemässen Arbeitsmaschine in einer Ausserbetriebsposition,
- Fig. 2: einen Grundriss der in Fig. 1 dargestellten Arbeitsmaschine mit angebauter Schneefräse,
- Fig. 3: eine räumliche Darstellung der in den Fig. 1 und 2 gezeigten Arbeitsmaschine mit einer angebauten Kehrbürste,
- Fig. 4: einen schematischen Längsquerschnitt eines mit einer hydraulischen Förderpumpe leitungsverbundenen Hydraulik-motors und
- Fig. 5: einen Längsschnitt durch eine Antriebsvorrichtung eines Arbeitsgerätes.

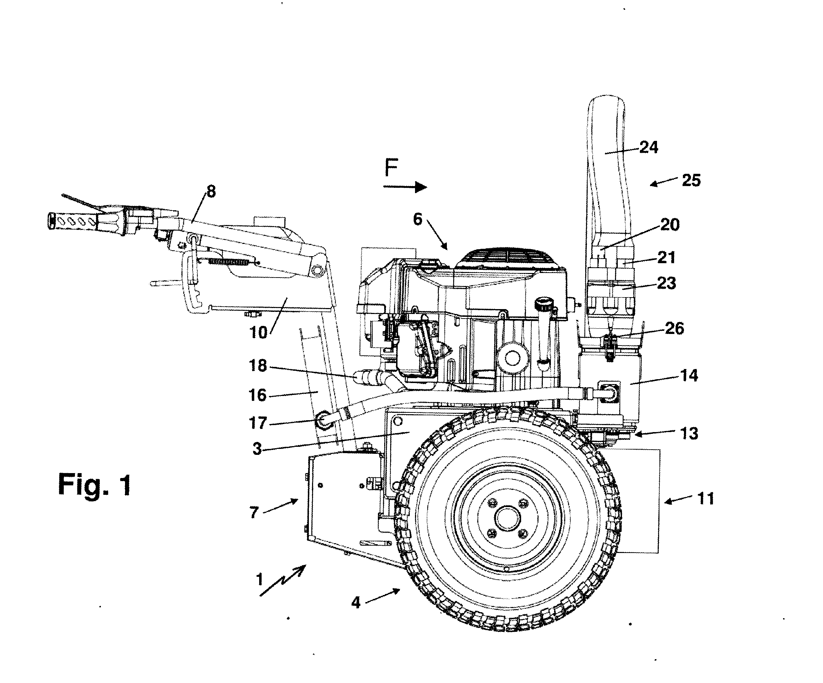

Fig. 1 zeigt die erfindungsgemässe, selbstfahrende Arbeitsmaschine 1 für das Betreiben und stossweise oder gezogene Fortbewegen unterschiedlicher Arbeits- resp. Anbaugeräte 15 in einer Park- oder Ausserbetriebsstellung. Die Arbeitsmaschine 1 ist mit einem reversierbaren Antrieb ausgestattet, der eine zur Fortbewegungsrichtung entgegengesetzte Fortbewegungsrichtung erlaubt und dementsprechend umschaltbar ist.

Die Arbeitsmaschine 1 besitzt ein Maschinengestell 2, an dem eine quer zu einer Fortbewegungsrichtung angeordnete Fahrachse 3 befestigt ist, die an den seitlichen Enden mittels Hydraulikmotoren angetriebene, bereifte Räder 4, 5 aufweist.

Das Maschinengestell 2 dient u.a. als Tragvorrichtung eines Verbrennungsmotors 6, eines Getriebes für das Fahrwerk 7 und Führungsholme 8, 9 zur manuellen Lenkung der Arbeitsmaschine 1. An den Führungsholmen 8, 9 sind Betätigungselemente für den Betrieb der Arbeitsmaschine 1 und dem jeweils angebauten Arbeitsgerät 15 befestigt. Zwischen den Führungsholmen 8, 9 ist ein Betriebsstoff- oder Brennstofftank 10 für den Verbrennungsmotor 6 resp. den Antriebsmotor der Arbeitsmaschine 1 angeordnet. Vorliegend weist der Antriebsmotor 6 eine vertikal angeordnete Antriebswelle auf und ist durch ein Zugmittelgetriebe mit der Hydraulikpumpe 14 verbunden.

Für den hydraulischen Fahrantrieb der Räder 4, 5 ist eine oder jeweils eine mit dem Antriebsmotor 6 verbundene Hydraulikpumpe (nicht ersichtlich) vorgesehen, die mit Antriebswellen der Räder 8, 9 gekuppelten Hydraulikmotoren steuerbar verbunden ist.

Fig. 1 veranschaulicht weiterhin eine schematisch angedeutete, an der gegenüberliegenden Seite der Führungsholme 8, 9 mit dem Maschinengestell verbundene Anbauvorrichtung 11 für hydraulisch angetriebene Arbeitsgeräte.

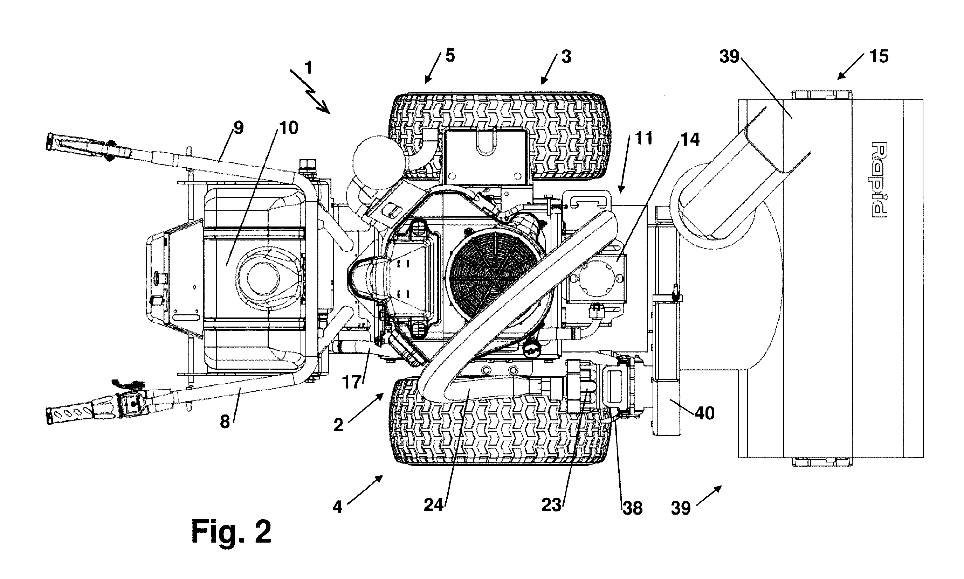

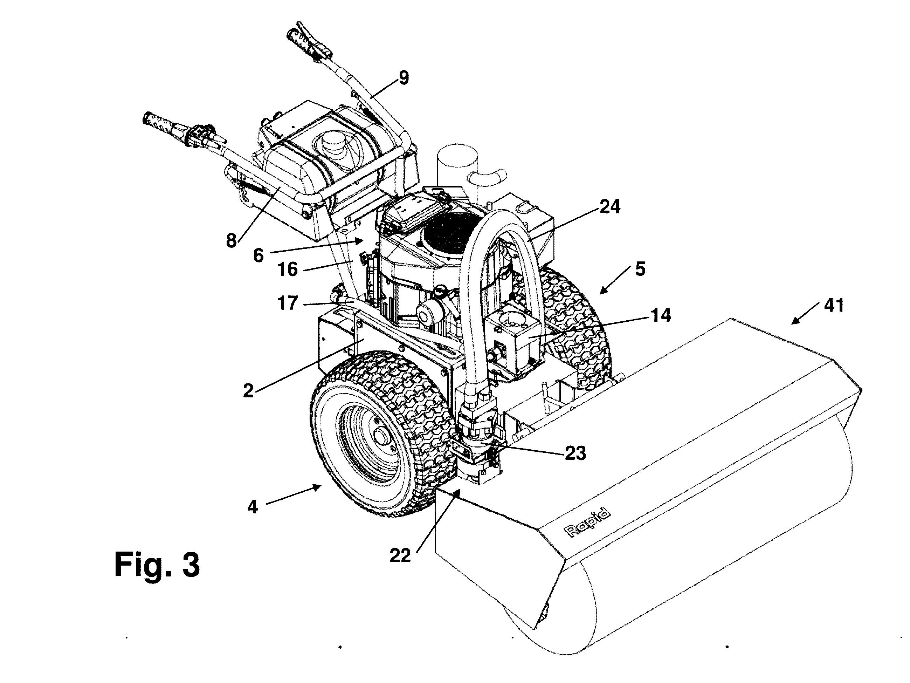

An dem Maschinengestell 2 frontseitig, auf einem Support 12 abgestützt befestigt befindet sich eine mit dem Antriebsmotor 6 der Arbeitsmaschine 1 mittels Zwischenvorgelege 13 angetriebene separate Hydraulikpumpe 14 für den Antrieb der mittels einer Koppelungsvorrichtung an der Anbauvorrichtung 11 adaptierbaren Arbeitsgerätte 15, wie sie in den Fig. 2 und 3 beispielhaft veranschaulicht sind.

Die Hydraulikpumpe 14 ist in einen ein Kühlaggregat 16 aufweisenden Flüssigkeitskreislauf geschaltet, der auch aus Ölleitungsabschnitten besteht, von denen Ölleitungsabschnitt 17 in den Fig. 1 bis 3 erkennbar ist.

Die Leitungsverbindung der mit dem Antriebsmotor 6 mechanisch gekuppelten Hydraulikpumpe 14 führt ein flüssiges Druckmedium über einen Kreislauf aus einer mit der Hydraulikpumpe 14 verbundenen Vorlauf(druck)leitung 20 und einer an die Hydraulikpumpe14 angeschlossenen Rückleitung 21 zwischen die ein mit einer mechanischen Antriebsvorrichtung 22 des Arbeitsgerätes 15 kuppelbarer Hydraulikmotor 23 geschaltet ist. Die Vorlauf(druck)leitung 20 und die Rücklaufleitung 21 sind aus flexiblen Hochdruck- resp. Hydraulikschläuchen gebildet, die an den von der Hydraulikpumpe 14 abgewandten Enden an den Hydraulikmotor 23 angeschlossen sind, wozu bekannte Verschraubungen vorgesehen sind. Vor 20- und Rücklaufleitung 21 sind zwischen Hydraulikpumpe 14 und Hydraulikmotor 23 durch einen schlauchförmigen Mantel zu einem Schlauchpaket 24 vereint und bilden eine mobile resp. flexible Arbeitswelle 25. Der das freie Ende der Arbeitswelle 25 bildende Hydraulikmotor 23 kann gemäss Fig. 1 in der Ausserbetriebsposition der Arbeitsmaschine 1 auf der Hydraulikpumpe 14 mittels von Hand betätigbarem Spannverschluss 26 gehalten werden.

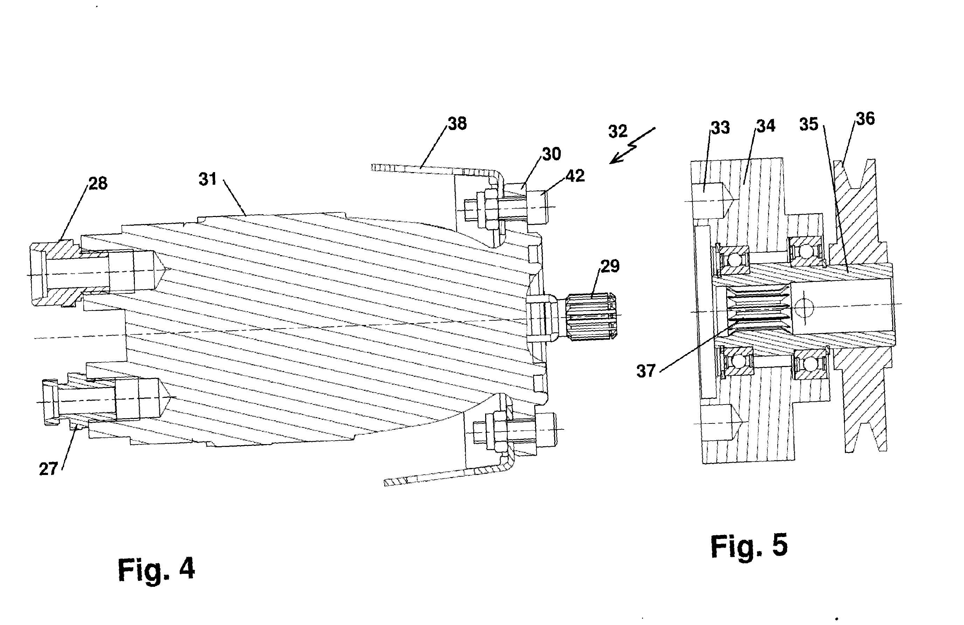

Fig. 4 zeigt eine schematische Darstellung des an dem dem Arbeitsgerät 15 zugewandten Ende des Schlauchpakets 24 befestigten Hydraulikmotors 23 mit den eingeschraubten Verschraubungen 27, 28 und der Abtriebswelle 29 auf der gegenüberliegenden Flanschseite des Hydraulikmotors 23.

Ein mit dem Gehäuse 31 verbundener Flansch 30 weist eine durch mehrere Zylinderkopfschrauben 42 am Umfang gebildete Drehmomentabstützung 32 auf, die beim Kuppeln resp. Verbinden des Hydraulikmotors 23 mit der Antriebsvorrichtung 22 des Arbeitsgerätes 15 in eine entsprechende Ausnehmungen 33 aufweisendes, am Arbeitsgerät 15 befestigtes Lagergehäuse 34 eingreift (siehe Fig. 5).

Das mit einem Traggestell des Arbeitsgerätes 15 verbundene Lagergehäuse 34 weist eine drehbar gelagerte Antriebswelle 35 auf, an deren freiem Ende befestigte Riemenscheibe 36 eines Zugmittelgetriebes (nicht ersichtlich) auf. Die Antriebswelle 35 ist als Hohlwelle ausgebildet und an dem dem Hydraulikmotor 23 zugewandten Ende mit einer mehrkeiligen Bohrung 37 versehen, in die die komplementär ausgebildete Abtriebswelle 29 des Hydraulikmotors 23 eingesteckt ist. Der einsteckbare Hydraulikmotor 23 wird durch einen der Drehmomentabstützung 32 zugeordneten Spannverschluss 26 (siehe Fig. 2 und 3), von der in Fig. 4 eine Einrastöse 38 dargestellt ist, an dem Lagergehäuse 34 des Arbeitsgerätes 15 festgehalten resp. gesichert.

Fig. 2 offenbart eine Arbeitsmaschine 1 mit einer angebauten Schneefräse 39, die von einem Zugmittelgetriebe 40 durch den aufgesteckten Hydraulikmotor 23 angetrieben wird. Das Zugmittelgetriebe 40 ist am Traggestell der Schneefräse 39 und die Abtriebswelle 29 des Hydraulikmotors 23 ist in eine Antriebswelle des Riemengetriebes der Schneefräse 39 eingesteckt resp. der Hydraulikmotor an der Antriebsvorrichtung 22 der Schneefräse 39 verdrehsicher festgehalten.

Selbstverständlich kann die Antriebskraft des Hydraulikmotors 23 auch durch ein Zahnradgetriebe auf die Arbeitsgeräte 15 übertragen werden.

Fig. 3 veranschaulicht die Arbeitsmaschine 1 mit einer angebauten Kehrbürste 41, bei der die am Traggestell befestigte Antriebsvorrichtung 22 eine senkrecht stehende Antriebswelle aufweist, sodass der Hydraulikmotor 23 aufgrund des flexiblen Schlauchpakets in die an dem Arbeitsgerät bestimmte Position der Antriebswelle aufsteckbar ist.

Den Fig. 1 bis 3 ist weiterhin zu entnehmen, dass der Hydraulikmotor 23 sowohl in horizontaler wie auch in vertikaler Richtung in eine Antriebswelle 35 einer Antriebsvorrichtung 22 eines Arbeitsgerätes 15 oder an der ruhenden Arbeitsmaschine einsteckbar ist resp. sonstwie mit diesen kuppelbar ist.

## Patentansprüche

1. Selbstfahrende, vorzugsweise einachsige, manuell lenkbare Arbeitsmaschine (1) für das Fortbewegen und/oder Antreiben von anbaubaren Arbeitsgeräten (15), mit einem Antriebsmotor (6) und einer von diesem hydraulisch oder mechanisch antreibbaren, beidseits eines Fahrgestells quer zur Fortbewegungsrichtung abstehenden Fahrachse (3), an deren Enden jeweils ein mit einer Antriebswelle verbundenes Rad (4, 5) angeordnet ist, und einer mit dem Antriebsmotor (6) zuschaltbar verbundenen Arbeitswelle (25) für den Antrieb des an dem Maschinengestell (2) angebauten Arbeitsgerätes (15), **dadurch gekennzeichnet, dass** die Arbeitswelle (25) durch eine mit dem Antriebsmotor (6) der Arbeitsmaschine (1) antriebsverbundene Hydraulikpumpe (14) und einem mit letzterer leitungsverbundenen, arbeitsgeräteseitig mit einer Antriebsvorrichtung (22) eines Arbeitsgerätes (15) mechanisch kuppel- resp. entkuppelbaren Hydraulikmotor (23) ausgebildet ist.

2. Maschine nach Anspruch 1, **dadurch gekennzeichnet, dass** die Leitungsverbindung zwischen Hydraulikpumpe (14) und Hydraulikmotor (23) durch Vor (20)- und Rücklaufleitung (21) ausgebildet ist.

3. Maschine nach Anspruch 1 oder 2, **dadurch gekennzeichnet, dass** das von der Hydraulikpumpe (14) abgewandte Ende der Vor (20)-und Rücklaufleitung (21) durch den mit einer Antriebswelle (35) der Antriebsvorrichtung (22) verbundenen Hydraulikmotor (23) ausgebildet ist.

4. Maschine nach einem der Ansprüche 1 bis 3, **dadurch gekennzeichnet, dass** eine Abtriebswelle (29) des Hydraulikmotors (23) mit einer Antriebswelle (35) der Antriebsvorrichtung (22) eines Arbeitsgerätes (15) verbunden ist.

5. Maschine nach Anspruch 4, **dadurch gekennzeichnet, dass** die Abtriebswelle (29) des Hydraulikmotors (23) formschlüssig in eine komplementär ausgebildete Bohrung der Antriebswelle (35) der Antriebsvorrichtung (22) einsteckbar ausgebildet ist.

6. Maschine nach Anspruch 5, **dadurch gekennzeichnet, dass** die Abtriebswelle (29) des Hydraulikmotors (23) ein keilförmiges Ende aufweist, das in die als Hohlwelle ausgebildete Antriebswelle (35) der Antriebsvorrichtung (22) einsteckbar ist.

7. Maschine nach einem der Ansprüche 1 bis 6, dadurch gekenn-zeichnet, dass der Hydraulikmotor (23) an einem Arbeitsgerät (15) verdrehsicher befestigbar ist.

8. Maschine nach Anspruch 7, **dadurch gekennzeichnet, dass** der Hydraulikmotor (23) an einem an dem Arbeitsgerät (15) befestigten Lagergehäuse (34) der Antriebsvorrichtung (22) verdrehsicher befestigt ist.

9. Maschine nach einem der Ansprüche 2 bis 8, dadurch gekenn-zeichnet, dass Vor (20)- und Rücklaufleitung (21) zwischen Hydraulikpumpe (14) und Hydraulikmotor (23) durch einen schlauchförmigen Mantel zu einem flexiblen Schlauchpaket (24) vereint sind.

10. Maschine nach einem der Ansprüche 2 bis 9, **dadurch gekennzeichnet, dass** das durch den Hydraulikmotor (23) gebildete Ende der Arbeitswelle (25) resp. der Vor (20)- und Rücklauf (21) leitungen (21) in der Betriebsposition mittels Spannverschluss (26) an einem Lagergehäuse (34) der Antriebsvorrichtung (22) eines Arbeitsgerätes (15) resp. einem Traggestell des Arbeitsgerätes (15) festgehalten ist.

11. Maschine nach einem der Ansprüche 2 bis 10, **dadurch gekennzeichnet, dass** das durch den Hydraulikmotor (23) gebildete Ende der Vor (20)- und Rücklauf (21) leitungen in der Ausserbetriebsposition mittels Spannverschluss (26) an dem Maschinengestell (2) resp. an der Hydraulikpumpe (23) festgehalten ist.

12. Maschine nach einem der Ansprüche 2 bis 10, **dadurch gekennzeichnet, dass** das durch den Hydraulikmotor (23) gebildete Ende der Vor (20)- und Rücklauf (21) leitungen (21) in der Ausserbetriebsposition mittels Spannverschluss (26) an dem Maschinengestell (2) resp. an der Hydraulikpumpe (23) festgehalten ist.

13. Maschine nach einem der Ansprüche 2 bis 11, **dadurch gekennzeichnet, dass** der Hydraulikmotor (23) in der Ausserbetriebsstellung der Arbeitsmaschine (1) oder in der Betriebsstellung eines Arbeitsgerätes (15) in horizontaler oder vertikaler Richtung in eine entsprechende Steckverbindung resp. in die Antriebswelle (35) der Antriebsvorrichtung (22) eines Arbeitsgerätes (15) einsteckbar ist.
